# EUROPEAN PATENT APPLICATION

(11) **EP 4 269 168 A1**
(43) Date of publication of application: **01.11.2023**
(21) Application number: 21969290.2
(22) Date of filing: 27.12.2021
(51) Int. Cl.: B60L 58/27, B60L 58/26, B60H 1/00, H01M 10/615, H01M 10/613, H01M 10/625, H01M 10/635

(54) **THERMAL MANAGEMENT SYSTEM USED FOR ELECTRIC VEHICLE, AND ELECTRIC VEHICLE**

(71) Applicant: Contemporary Amperex Technology Co., Limited, Ningde City, Fujian 352100 (CN)
(72) Inventor: LIU, Yao, Ningde City, Fujian 352100 (CN); ZHAO, Yu, Ningde City, Fujian 352100 (CN); ZHOU, Zhengzhu, Ningde City, Fujian 352100 (CN); JIANG, Liwen, Ningde City, Fujian 352100 (CN); WU, Kai, Ningde City, Fujian 352100 (CN)
(74) Representative: Rowlands, Stuart Michael
(86) International application number: PCT/CN2021/141761
(87) International publication number: WO 2023/122904

(57) **Abstract**

Provided is a thermal management system (100) used for an electric vehicle, said electric vehicle (1) comprising a battery (10), the battery (10) being used for providing electrical energy to the electric vehicle (1); the thermal management system (100) comprising: a first heat exchange apparatus (110), used for regulating the temperature of the interior of the vehicle; and a second heat exchange apparatus (120), used for regulating the temperature of the battery (10); wherein the first heat exchange apparatus (110) and the second heat exchange apparatus (120) are connected in series or in parallel, and are used for simultaneously regulating the temperature of the interior of the vehicle and of the battery (10). The thermal management system (100) used for an electric vehicle regulates the temperature of the battery (10) and the interior of the vehicle simultaneously by means of the first heat exchange apparatus (110) and the second heat exchange apparatus (120); the vehicle interior thermal management system and the battery thermal management system are appropriately integrated, facilitating the battery (10) being within a normal operating temperature range, and also facilitating increased energy utilization rate and battery life and range of the electric vehicle. Also disclosed is an electric vehicle.

## Description

### TECHNICAL FIELD

The present application relates to the field of thermal management, and in particular, to a thermal management system for an electric vehicle and an electric vehicle.

### BACKGROUND

With the rapid development of new energy technologies, power batteries have been applied to vehicles more widely. At present, an electric vehicle usually has three major thermal management systems: a vehicle interior thermal management system, a battery thermal management system and a motor thermal management system.

In related technologies, the three major thermal management systems are generally designed independently, and all require a battery to supply power to each system. The integration between the systems is low, and the energy utilization is low, resulting in a large power loss, which is not beneficial to increasing a cruising range of the electric vehicle.

### SUMMARY

The present application is made in view of the foregoing problem, and the objective is to provide a thermal management system for an electric vehicle and an electric vehicle, which is beneficial to avoiding attenuation of a cruising range of the electric vehicle at a low temperature. Specific technical solutions are given as follows.

In a first aspect of the present application, a thermal management system for an electric vehicle is provided, the electric vehicle including a battery for providing electric energy for the electric vehicle, where the thermal management system includes: first heat exchange means configured to regulate a temperature of a vehicle interior; and second heat exchange means configured to regulate a temperature of the battery; where the first heat exchange means and the second heat exchange means are coupled in series or in parallel for simultaneously regulating the temperatures of the vehicle interior and the battery.

Generally, if a battery is in a low-temperature state, attenuation of its available energy and power will be relatively severe, and long-term use in the low-temperature state will accelerate the aging of the battery and shorten its service life. The thermal management system for the electric vehicle according to an embodiment of the present application simultaneously regulates the temperatures of the battery and the vehicle interior through the first heat exchange means and the second heat exchange means. That is, a vehicle interior thermal management system and a battery thermal management system are properly integrated and designed, which is beneficial to keeping the battery in a normal working temperature range, to improving the energy utilization, and further to increasing a cruising range of the electric vehicle.

When the first heat exchange means and the second heat exchange means are connected in parallel, the temperatures of the battery and the vehicle interior are raised or lowered respectively through the first heat exchange means and the second heat exchange means. For example, when an ambient temperature is relatively high, the temperature of the vehicle interior may be lowered through the first heat exchange means, and at the same time, the temperature of the battery may be lowered through the second heat exchange means. When the first heat exchange means and the second heat exchange means are connected in series, heat exchange may be performed between the first heat exchange means and the second heat exchange means, so as to realize temperature regulation and control of the vehicle interior and the battery at the same time. For example, when the vehicle has just started, the temperature of the battery is relatively low, and in this case, the heat exchange may be performed between the low-temperature battery and the vehicle interior through the series connection between the first heat exchange means and the second heat exchange means, thereby raising the temperature of the battery quickly and lowering the temperature of the vehicle interior until the battery is in a normal working temperature range; or the temperature of the battery is relatively high after working for a long time, and the heat of the high-temperature battery may be exchanged with that of the vehicle interior through the series connection between the first heat exchange means and the second heat exchange means, thereby recovering the heat of the battery for heating the vehicle interior, and improving the energy utilization. Therefore, through the thermal management system according to the embodiment of the present application, it is beneficial to keeping the battery in the normal working temperature range, to improving the energy utilization, and further to increasing the cruising range of the electric vehicle.

The thermal management system for the electric vehicle according to the embodiment of the present application may further have the following additional technical features.

In some embodiments of the present application, the thermal management system includes a battery first loop, the battery first loop includes the battery and the second heat exchange means, and the battery and the second heat exchange means are coupled in series or are not coupled through a first four-way valve and a second four-way valve respectively.

The battery first loop is a loop used to regulate and control the temperature of the battery, and the battery is connected with the second heat exchange means through the first four-way valve and the second four-way valve. The two four-way valves have multiple working states, thereby realizing the series connection or no connection between the battery and the second heat exchange means. By providing the two four-way valves, multiple modes of temperature regulation and control of the battery can be realized, which is beneficial to reducing complexity of the thermal management system.

Further, the terminal management system further includes a motor configured to drive the electric vehicle, and in the thermal management system, the motor and the battery are coupled in series or are not coupled through the first four-way valve and the second four-way valve. When the motor and the battery are connected in series, the temperature of the battery may be regulated through the temperature generated during the working of the motor, thereby realizing heat recovery; and when the motor and the battery are not connected, the temperature of the battery may be regulated and controlled through the first heat exchange means or the second heat exchange means. That is, according to the thermal management system of the present application, the motor is properly integrated and designed, which is beneficial to further improving a loss of the battery.

Further, the thermal management system further includes third heat exchange means, the third heat exchange means and the first heat exchange means are coupled in series, the third heat exchange means is configured to exchange heat between a refrigerant and outdoor air, the first heat exchange means is configured to regulate the temperature of the vehicle interior through refrigerant circulation, and the second heat exchange means is configured to regulate the temperature of the battery through the refrigerant circulation. By providing the third heat exchange means, the heat of the vehicle interior and the battery can be released to the outdoor air, or the heat of the outdoor air can be transferred to the vehicle interior and the battery, thereby regulating the temperatures of the vehicle interior and the battery.

In some embodiments of the present application, the thermal management system has a first working mode; and in a case that the thermal management system is in the first working mode, the third heat exchange means absorbs heat from the outdoor air, the first heat exchange means releases heat to the vehicle interior, the second heat exchange means releases heat, and the battery first loop is on to heat the battery through the second heat exchange means.

In the first working mode, the third heat exchange means transfers the heat in the air to the vehicle interior and the battery, thereby realizing that the battery and the vehicle interior can be heated simultaneously.

Further, the motor and the battery are not coupled in the case that the thermal management system is in the first working mode. In this case, the second heat exchange means only heats the battery, which is beneficial to speeding up the heating efficiency of the battery. Meanwhile, it is also beneficial to avoiding overheating of the motor.

In some embodiments of the present application, the first heat exchange means includes an indoor condenser; the thermal management system further includes a compressor and first throttling means; and in the case that the thermal management system is in the first working mode, the compressor, the indoor condenser, the first throttling means and the third heat exchange means are coupled in sequence to form a first refrigerant heating circulation loop; and the compressor, the second heat exchange means, the first throttling means and the third heat exchange means are coupled in sequence to form a second refrigerant heating circulation loop.

The embodiments of the present application specifically illustrate a working manner of the first working mode, in which ambient heat may be absorbed through the first refrigerant heating circulation loop and the second refrigerant heating circulation loop in a low-temperature environment, and then the battery and the vehicle interior are heated simultaneously. Specifically, the first heat exchange means includes the indoor condenser, the compressor compresses and drives the refrigerant, and in this case, the refrigerant is in a gaseous state with high temperature and high pressure. Then, the refrigerant is sent to the indoor condenser and the second heat exchange means respectively, the refrigerant releases heat to the low-temperature vehicle interior and second heat exchange means respectively, and the second heat exchange means is also in communication with the battery through the first four-way valve and the second four-way valve, so as to heat the vehicle interior and the battery simultaneously, and the refrigerant becomes in a liquid state with high pressure and low temperature. Next, after passing through the first throttling means and becoming in a liquid state with low pressure and low temperature, the refrigerant coming out of the indoor condenser and the second heat exchange means flows through the third heat exchange means, the third heat exchange means may be an outdoor heat exchanger, and after absorbing the ambient heat through the third heat exchange means, the refrigerant is vaporized into gas and enters the compressor to continue the next circulation.

Further, the thermal management system further includes a first liquid pump, and the first liquid pump is disposed in the battery first loop. The first liquid pump may provide power to drive the liquid in the battery first loop to flow, which is beneficial to the sufficient heat exchange between the battery and the second heat exchange means.

In some embodiments of the present application, the thermal management system has a second working mode; and in a case that the thermal management system is in the second working mode, the first heat exchange means absorbs heat from the vehicle interior, the second heat exchange means releases heat, and the first battery loop is on to heat the battery through the second heat exchange means.

In the second working mode according to the embodiments of the present application, the first heat exchange means and the second heat exchange means are connected in series, and the second heat exchange means and the battery communicate, so that the first heat exchange means and the second heat exchange means exchange heat to heat the battery.

Further, the motor and the battery are not coupled in the case that the thermal management system is in the second working mode. In this case, the second heat exchange means only heats the battery, which is beneficial to speeding up the heating efficiency of the battery. Meanwhile, it is also beneficial to avoiding overheating of the motor.

In some embodiments of the present application, the first heat exchange means includes an evaporator; the thermal management system further includes a compressor and second throttling means; and in the case that the thermal management system is in the second working mode, the compressor, the second heat exchange means, the second throttling means and the evaporator are coupled in sequence to form a third refrigerant heating circulation loop.

The embodiments of the present application specifically illustrate a working manner of the second working mode, in which the heat of the vehicle interior may be absorbed through the third refrigerant heating circulation loop in a low-temperature environment, and then the battery is heated. Specifically, the first heat exchange means includes the evaporator, the compressor compresses and drives the refrigerant, and in this case, the refrigerant is in a gaseous state with high temperature and high pressure. Then, the refrigerant is sent to the second heat exchange means and releases heat to the second heat exchange means, and the second heat exchange means is also in communication with the battery through the first four-way valve and the second four-way valve, so that the second heat exchange means heats the battery, and the refrigerant becomes in a liquid state with high pressure and low temperature after releasing the heat. Next, after passing through the second throttling means and becoming in a liquid state with low pressure and low temperature, the refrigerant coming out of the second heat exchange means flows through the evaporator of the vehicle interior, and after absorbing the heat of the vehicle interior through the evaporator, the refrigerant is vaporized into gas and enters the compressor to continue the next circulation. According to the embodiments of the present application, the battery is heated by the heat of the vehicle interior, so that the battery is at a good working temperature, which is beneficial to avoiding energy and power attenuation of the battery, improving the service life of the battery, and further ensuring the normal power supply of the electric vehicle.

Further, the thermal management system further includes electric heating means, and the electric heating means is configured to supply heat to the vehicle interior by means of electric heating. By providing the electric heating means, the temperature of the vehicle interior can be raised to avoid an excessive heat loss of the vehicle interior.

Further, the thermal management system further includes a first liquid pump, and the first liquid pump is disposed in the battery first loop. The first liquid pump may provide power to drive the liquid in the battery first loop to flow, which is beneficial to the sufficient heat exchange between the battery and the second heat exchange means.

In some embodiments of the present application, the thermal management system has a third working mode; and in a case that the thermal management system is in the third working mode, the third heat exchange means absorbs heat from the outdoor air, the first heat exchange means releases heat to the vehicle interior, the second heat exchange means absorbs heat, and the battery and the second heat exchange means are not coupled.

In the third working mode, the battery and the second heat exchange means are not connected, the third heat exchange means and the second heat exchange means transfer the external heat to the vehicle interior, thereby realizing the heating of the vehicle interior at a low temperature.

Further, the thermal management system further includes a heat exchange water tank, and the heat exchange water tank and the second heat exchange means are coupled in series or are not coupled through the first four-way valve and the second four-way valve; and in the case that the thermal management system is in the third working mode, the heat exchange water tank and the second heat exchange means are coupled in series.

In the third working mode, the second heat exchange means is also connected with the heat exchange water tank in series, and in this case, the second heat exchange means may exchange heat with the heat exchange water tank. That is, the second heat exchange means may absorb the heat of the heat exchange water tank to heat the vehicle interior.

In some embodiments of the present application, the motor and the battery are coupled in series in the case that the thermal management system is in the third working mode.

In the third working mode, the battery is in communication with the motor through the first four-way valve and the second four-way valve, and in this way, the heat generated during the working of the motor may heat the battery, thereby recovering the heat of the motor, which is beneficial to improving the energy utilization.

Specifically, the first heat exchange means includes an indoor condenser; the thermal management system further includes a compressor, first throttling means, and third throttling means; and in the case that the thermal management system is in the third working mode, the compressor, the indoor condenser, the first throttling means and the third heat exchange means are coupled in sequence to form a first refrigerant heating circulation loop; and the compressor, the indoor condenser, the third throttling means and the second heat exchange means are coupled in sequence to form a fourth refrigerant heating circulation loop.

The embodiments of the present application specifically illustrate a working manner of the third working mode, in which the external heat may be absorbed through the first refrigerant heating circulation loop and the fourth refrigerant heating circulation loop in a low-temperature environment, and then the vehicle interior is heated. Specifically, the first heat exchange means includes the indoor condenser, and the indoor condenser and the second heat exchange means are connected in parallel. The compressor compresses and drives the refrigerant, and in this case, the refrigerant is in a gaseous state with high temperature and high pressure. Then, the refrigerant is sent to the indoor condenser and releases heat to the vehicle interior, and in this case, the refrigerant becomes in a liquid state with high pressure and low temperature after releasing the heat. Next, the refrigerant coming out of the indoor condenser flows through two paths. The first path is: after passing through the first throttling means and becoming in a liquid state with low pressure and low temperature, the refrigerant flows through the third heat exchange means, and after absorbing the heat of the external environment through the third heat exchange means, the refrigerant is vaporized into gas and enters the compressor to continue the next circulation; and the second path is: after passing through the third throttling means and becoming in a liquid state with low pressure and low temperature, the refrigerant flows through the second heat exchange means, and after absorbing the heat of the external environment through the second heat exchange means, the refrigerant is vaporized into gas and enters the compressor to continue the next circulation. That is, the refrigerant absorbs the outdoor heat on the two branch loops simultaneously to heat the vehicle interior, which beneficially improves the heating efficiency of the vehicle interior.

In some embodiments of the present application, the thermal management system further includes a first liquid pump, and the first liquid pump is disposed between the second heat exchange means and the first four-way valve or between the second heat exchange means and the second four-way valve; and in the case that the thermal management system is in the third working mode, the first liquid pump is configured to provide power for water circulation between the heat exchange water tank and the second heat exchange means.

Providing the first liquid pump is beneficial to the sufficient heat exchange between the second heat exchange means and the heat exchange water tank.

In some embodiments of the present application, the thermal management system further includes a second liquid pump, and the second liquid pump is disposed between the motor and the first four-way valve or between the motor and the second four-way valve; and in the case that the thermal management system is in the third working mode, the second liquid pump is configured to provide power for water circulation between the motor and the battery.

Providing the second liquid pump is beneficial to the sufficient heat exchange between the battery and the motor.

In some embodiments of the present application, the thermal management system has a fourth working mode; and in a case that the thermal management system is in the fourth working mode, the third heat exchange means releases heat to the outdoor air, the first heat exchange means absorbs heat from the vehicle interior, the second heat exchange means absorbs heat, and the battery first loop is on to cool the battery through the second heat exchange means.

In the fourth working mode, the first heat exchange means and the second heat exchange means respectively transfer the heat of the vehicle interior and the battery to the outside air, thereby realizing that the temperatures of the battery and the vehicle interior can be lowered simultaneously at a high temperature.

Further, the thermal management system further includes a heat exchange water tank, and the heat exchange water tank and the second heat exchange means are coupled in series or are not coupled through the first four-way valve and the second four-way valve; and in the case that the thermal management system is in the fourth working mode, the motor and the battery are not coupled, the heat exchange water tank and the second heat exchange means are not coupled, and the heat exchange water tank and the motor are coupled in series.

According to the embodiments of the present application, by providing the heat exchange water tank, the heat dissipation requirement of the motor is realized. In the fourth working mode, since the motor and the heat exchange water tank are connected in series, the high heat generated by the motor circulates to the heat exchange water tank through water circulation, and then the heat exchange water tank transfers the heat to the air, thereby dissipating the heat from the motor and keeping the motor in a normal working temperature range. In this way, it is beneficial to improving the service life of the motor.

In some embodiments of the present application, the first heat exchange means includes an evaporator; the thermal management system further includes a compressor, second throttling means, and third throttling means; and in the case that the thermal management system is in the fourth working mode, the compressor, the third heat exchange means, the second throttling means and the evaporator are coupled in sequence to form a fifth refrigerant heating circulation loop; and the compressor, the third heat exchange means, the third throttling means and the second heat exchange means are coupled in sequence to form a sixth refrigerant heating circulation loop.

The embodiments of the present application specifically illustrate a working manner of the fourth working mode, in which the heat of the vehicle interior and the battery may be absorbed through the fifth refrigerant heating circulation loop and the sixth refrigerant heating circulation loop in a high-temperature environment, so as to lower the temperatures of the battery and the vehicle interior. Specifically, the first heat exchange means includes the evaporator, and the evaporator and the second heat exchange means are connected in parallel. The compressor compresses and drives the refrigerant, and in this case, the refrigerant is in a gaseous state with high temperature and high pressure. Then, the refrigerant is sent to the third heat exchange means and releases heat to the outside air, and in this case, the refrigerant becomes in a liquid state with high pressure and low temperature after releasing the heat. Next, the refrigerant coming out of the third heat exchange means flows through two paths. The first path is: after passing through the second throttling means and becoming in a liquid state with low pressure and low temperature, the refrigerant flows through the evaporator, after absorbing the heat of the vehicle interior through the evaporator, the refrigerant is vaporized into gas and enters the compressor to continue the next circulation, and in this case, the temperature of the vehicle interior decreases. The second path is: after passing through the third throttling means and becoming in a liquid state with low pressure and low temperature, the refrigerant flows through the second heat exchange means, the second heat exchange means is in communication with the battery through the first four-way valve and the second four-way valve, that is, the battery first loop is on, therefore, after absorbing the heat of the battery through the second heat exchange means, the refrigerant is vaporized into gas and enters the compressor to continue the next circulation, and in this case, the temperature of the vehicle interior decreases.

In some embodiments of the present application, the thermal management system further includes a first liquid pump and a second liquid pump, the first liquid pump is disposed between the second heat exchange means and the first four-way valve or between the second heat exchange means and the second four-way valve, and the second liquid pump is disposed between the motor and the first four-way valve or between the motor and the second four-way valve; and in the case that the thermal management system is in the fourth working mode, the first liquid pump is configured to provide power for water circulation between the battery and the second heat exchange means, and the second liquid pump is configured to provide power for water circulation between the motor and the heat exchange water tank.

Providing the first liquid pump is beneficial to the sufficient heat exchange between the second heat exchange means and the battery; and providing the second liquid pump is beneficial to the sufficient heat exchange between the motor and the heat exchange water tank.

In some embodiments of the present application, the thermal management system has a fifth working mode; and in a case that the thermal management system is in the fifth working mode, the first heat exchange means releases heat to the vehicle interior while absorbing heat from the vehicle interior to dehumidify the vehicle interior, the third heat exchange means absorbs heat from the outdoor air, the second heat exchange means absorbs heat, and the battery and the second heat exchange means are coupled in series to recover heat of the battery through the second heat exchange means.

In the fifth working mode, the second heat exchange means and the battery are connected in series, and the first heat exchange means exchanges heat with the third heat exchange means and the second heat exchange means respectively, thereby transferring the heat of the outdoor air and the heat of the battery to the vehicle interior to heat the vehicle interior, which also realizes the recovery of battery heat, and is beneficial to improving the energy utilization. Meanwhile, the first heat exchange means may further dehumidify the vehicle interior.

Further, the motor, the battery and the second heat exchange means are coupled in series in the case that the thermal management system is in the fifth working mode.

With such an arrangement, the heat of the motor may be recovered through the second heat exchange means, which beneficially further improves the energy utilization.

In some embodiments of the present application, the first heat exchange means includes an indoor condenser and an evaporator; the thermal management system further includes a compressor, first throttling means, second throttling means, and third throttling means; and in the case that the thermal management system is in the fifth working mode, the compressor, the indoor condenser, the first throttling means and the third heat exchange means are coupled in sequence to form a first refrigerant heating circulation loop; the compressor, the indoor condenser, the second throttling means and the evaporator are coupled in sequence to form a seventh refrigerant heating circulation loop; and the compressor, the indoor condenser, the third throttling means and the second heat exchange means are coupled in sequence to form an eighth refrigerant heating circulation loop.

The embodiments of the present application specifically illustrate a working manner of the fifth working mode. The first refrigerant heating circulation loop may absorb the heat of the outside air, thereby heating the vehicle interior; the seventh refrigerant heating circulation loop may absorb moisture of the vehicle interior, thereby dehumidifying the vehicle interior; and the eighth refrigerant heating circulation loop may absorb the heat of the battery and the motor, thereby heating the vehicle interior, that is, the eighth refrigerant heating circulation loop recovers the heat of the battery and the motor. Specifically, the first heat exchange means includes the indoor condenser and the evaporator, and the third heat exchange means, the evaporator and the second heat exchange means are connected in parallel. The compressor compresses and drives the refrigerant, and in this case, the refrigerant is in a gaseous state with high temperature and high pressure. Then, the refrigerant is sent to the indoor condenser and releases heat to the vehicle interior, and in this case, the refrigerant becomes in a liquid state with high pressure and low temperature after releasing the heat. Next, the refrigerant coming out of the indoor condenser flows through three paths. The first path is: after passing through the first throttling means and becoming in a liquid state with low pressure and low temperature, the refrigerant flows through the third heat exchange means, and after absorbing the heat of the external environment through the third heat exchange means, the refrigerant is vaporized into gas and enters the compressor to continue the next circulation; the second path is: after passing through the second throttling means and becoming in a liquid state with low pressure and low temperature, the refrigerant flows through the evaporator, in this case, since the refrigerant is in a low-temperature state, the vapor of the vehicle interior is cooled and liquefied after passing through the evaporator, thereby dehumidifying the vehicle interior, and after absorbing the heat of the vehicle interior through the evaporator, the refrigerant is vaporized into gas and enters the compressor to continue the next circulation; and the third path is: after passing through the third throttling means and becoming in a liquid state with low pressure and low temperature, the refrigerant flows through the second heat exchange means, the second heat exchange means is connected with the motor and the battery in serine, therefore, after absorbing the heat of the battery and the motor through the second heat exchange means, the refrigerant is vaporized into gas and enters the compressor to continue the next circulation, and in this case, the heat of the battery and the motor may be used to heat the vehicle interior, that is, the heat recovery of the battery and the motor can be realized, which beneficially improves the energy utilization.

In some embodiments of the present application, the thermal management system further includes a first liquid pump and a second liquid pump, the first liquid pump is disposed between the second heat exchange means and the first four-way valve or between the second heat exchange means and the second four-way valve, and the second liquid pump is disposed between the motor and the first four-way valve or between the motor and the second four-way valve; and in the case that the thermal management system is in the fourth working mode, both the first liquid pump and the second liquid pump are configured to provide power for water circulation between the battery, the motor and the second heat exchange means.

Providing the first liquid pump and the second liquid pump is beneficial to the sufficient heat exchange between the second heat exchange means, the battery, and the motor.

In a second aspect of the present application, an electric vehicle is provided, including the thermal management system in the above first aspect.

The thermal management system used in the electric vehicle according to the embodiments of the present application regulates the temperatures of the battery and the vehicle interior simultaneously through the first heat exchange means and the second heat exchange means. That is, a vehicle interior thermal management system and a battery thermal management system are properly integrated and designed, which is beneficial to keeping the battery in a normal working temperature range, to improving the energy utilization, and further to increasing a cruising range of the electric vehicle.

### BRIEF DESCRIPTION OF THE DRAWINGS

FIG. 1 is a schematic structural diagram of an electric vehicle according to an embodiment of present application;
FIG. 2 is a schematic structural diagram of one of thermal management systems according to embodiments of the present application;
FIG. 3 is a schematic structural diagram of a first working mode of a thermal management system according to an embodiment of the present application;
FIG. 4 is a schematic structural diagram of a second working mode of a thermal management system according to an embodiment of the present application;
FIG. 5 is a schematic structural diagram of a third working mode of a thermal management system according to an embodiment of the present application;
FIG. 6 is a schematic structural diagram of a fourth working mode of a thermal management system according to an embodiment of the present application; and
FIG. 7 is a schematic structural diagram of a fifth working mode of a thermal management system according to an embodiment of the present application.

### Reference signs:

1-electric vehicle; 10-battery; 20-vehicle interior; 30-controller; 40-motor; 100-thermal management system; 110-first heat exchange means; 120-second heat exchange means; 130-battery first loop; 140-first four-way valve; 150-second four-way valve; 160-third heat exchange means; A-first working mode; 111-indoor condenser; 112-evaporator; 170-compressor; 180-first throttling means; 181-second throttling means; 182-third throttling means; 230-electric heating means; 300-first liquid pump; 301-second liquid pump; B-second working mode; C-third working mode; 400-heat exchange water tank; D-fourth working mode; E-fifth working mode; 500-gas-liquid separator; 601-first switch; 602- second switch; 603-third switch; 604-fourth switch; 605-fifth switch; 606-sixth switch; 700-three-way water valve; 801-first one-way valve; 802-second one-way valve; 803-third one-way valve.

### DESCRIPTION OF EMBODIMENTS

Embodiments of technical solutions of the present application will be described below in detail with reference to accompanying drawings. The following embodiments are intended only to illustrate the technical solutions of the present application more clearly and are therefore intended as examples only, and cannot be used to limit the protection scope of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions.

In the description of the embodiments of the present application, the technical terms such as "first" and "second" are merely used to distinguish different objects, and shall not be understood as an indication or implication of relative importance or implicit indication of the quantity of indicated technical features, a specific order or primary-secondary relationship. In the description of the embodiments of the present application, "a plurality of' means two or more, unless otherwise explicitly and specifically defined.

The phrase "embodiment" mentioned herein means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described herein may be combined with another embodiment.

In the description of the embodiments of the present application, the term "and/or" is only an association relation describing associated objects, which means that there may be three relations. For example, A and/or B may represent three situations: A exists alone, both A and B exist, and B exists alone. In addition, the character "/" herein generally indicates that the associated objects before and after the character are in an "or" relationship.

In the description of the embodiments of the present application, the term "a plurality of' means two or more (including two). Similarly, "a plurality of groups" means two or more groups (including two groups), and "a plurality of sheets" means two or more sheets (including two sheets).

In the description of the embodiments of the present application, orientations or positional relationships indicated by the technical terms such as "center", "lengthwise", "crosswise", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" are orientations or positional relationships shown based on the drawings, and the terms are merely for convenience of describing the embodiments of the present application and for simplifying the description, rather than for indicating or implying that an apparatus or element indicated must have a specific orientation, and must be constructed and operated in a specific orientation, which thus shall not be understood as limitation to the embodiments of present application.

In the description of the embodiments of the present application, unless otherwise explicitly specified and defined, the technical terms, such as "installation", "interconnection", "connection" and "fixing", should be understood in a broad sense. For example, they may be either a fixed connection, or a detachable connection, or an integrated connection; they may be a mechanical connection, or an electrical connection; and they may be a direct connection, or an indirect connection via an intermediate medium, or communication between interiors of two elements or the interactive relationship of two elements. Those of ordinary skill in the art may appreciate the specific meanings of the foregoing terms in the embodiments of the present application according to specific conditions.

With the rapid development of new energy technologies, power batteries have been applied to vehicles more widely. At present, an electric vehicle 1 usually has three major thermal management systems: a vehicle interior thermal management system, a battery thermal management system and a motor thermal management system. The vehicle interior thermal management system is configured to regulate and control the temperature of the vehicle interior, and the vehicle interior may be a passenger compartment, that is, the vehicle interior thermal management system may be an air-conditioning or heating system for lowering the temperature of the passenger compartment or heating it. The battery thermal management system is configured to dissipate heat from a battery or heat the battery so that the battery is in a normal working temperature range. The motor thermal management system is configured to dissipate heat from a motor so that the motor is in a normal working temperature range.

In related technologies, the three major thermal management systems are generally designed independently, and all require a battery to supply power to each system. For example, in a low-temperature environment, when the vehicle interior is heated using the vehicle interior thermal management system, the battery provides electric energy, the battery itself cannot be heated by the vehicle interior thermal management system but can be heated up only using the battery thermal management system, the battery thermal management system additionally consumes power, and when the battery works for a long time and the temperature rises to a high level, the excess heat of the battery can be dissipated to the outside air only through the battery thermal management system, and heat recovery cannot be performed. Meanwhile, the heat generated by the motor during operation can be dissipated to the outside air only through the motor thermal management system, and heat recovery cannot be performed. That is, the integration between various thermal management systems in the interior of the vehicle in the related technologies is relatively low, resulting in low energy utilization, and further causing in a large power loss, which is not beneficial to increasing a cruising range of the electric vehicle 1.

Based on the above problem, the inventor has developed a thermal management system for the electric vehicle 1, the vehicle interior thermal management system and the battery thermal management system are properly integrated and designed, which is beneficial to keeping the battery in a normal working temperature range, to improving the energy utilization, and further to increasing a cruising range of the electric vehicle 1.

The thermal management system according to the embodiments of the present application can be applied to various types of electric vehicles 1, for example, electric engineering vehicles (excavators, cranes, and the like), electric passenger vehicles, electric commercial vehicles (trucks, heavy trucks, and the like). The electric vehicle 1 with the thermal management system according to the embodiments of the present application is beneficial to improving the energy utilization, and further to increasing the cruising range of the electric vehicle 1.

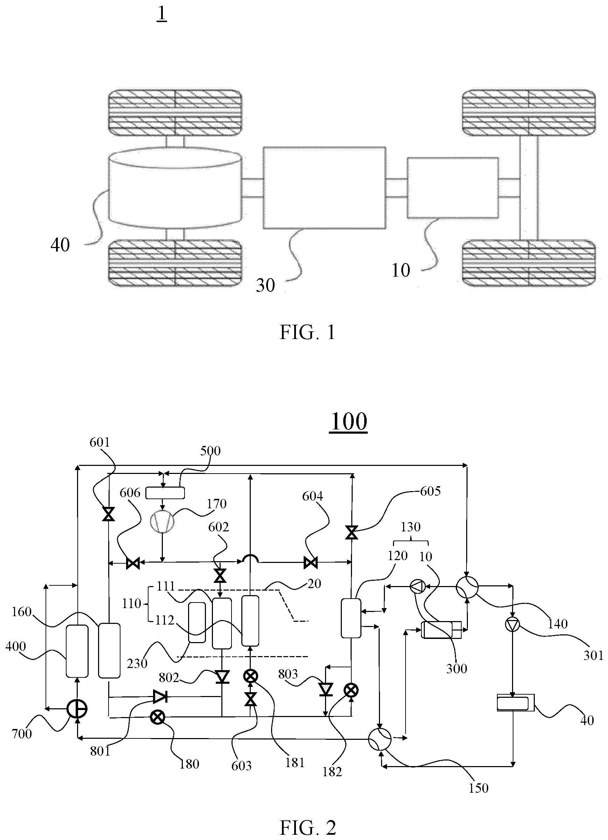

As shown in FIG. 1, FIG. 1 is a schematic structural diagram of an electric vehicle 1 with a thermal management system 100 according to an embodiment of the present application. An interior of the electric vehicle 1 is provided with a motor 40, a controller 30 and a battery 10, the controller 30 is configured to control the battery 10 to supply power to the motor 40, and the controller 30 may also control the thermal management system to be in different working modes, so as to realize various thermal management functions.

The battery 10 mentioned in the embodiments of the present application refers to a single physical module including one or more battery cells to provide a higher voltage and capacity. A plurality of battery cells may be connected in series and/or in parallel via poles for various applications. For example, in high-power applications of the electric vehicle 1, application of the battery includes three levels: a battery cell, a battery module, and a battery pack. The battery module is formed by electrically connecting a certain number of battery cells together and putting them in a frame in order to protect the battery cells from external impact, heat, vibration, or the like. The battery pack is the final state of a battery system installed in the electric vehicle 1. The battery pack generally includes a box for packaging one or more battery cells. The box may avoid liquid or other foreign matters to affect charging or discharging of the battery cell. The box is generally composed of a cover body and a case shell. Most existing battery packs are made by assembling various control and protection systems such as a battery management system (BMS) and a thermal management component on one or more battery modules. With the development of technology, the level of battery module may be omitted, that is, a battery pack is directly formed from a battery cell. This improvement results in a significant reduction in the number of components while increasing weight energy density and volumetric energy density of the battery system. The battery 10 mentioned in the present application may be a battery pack.

As shown in FIG. 2, in a first aspect of the present application, a thermal management system 100 for an electric vehicle 1 is provided, the electric vehicle 1 includes a battery 10 for providing electric energy for the electric vehicle 1, and the thermal management system 100 includes first heat exchange means 110 and second heat exchange means 120. The first heat exchange means 110 is configured to regulate a temperature of a vehicle interior 20, and the second heat exchange means 120 is configured to regulate a temperature of the battery 10. The first heat exchange means 110 and the second heat exchange means 120 are coupled in series or in parallel for simultaneously regulating the temperatures of the vehicle interior 20 and the battery 10.

The thermal management system 100 refers to a system for managing a temperature of the electric vehicle 1, for example, it may include the aforementioned battery thermal management system, motor thermal management system, vehicle interior thermal management system, and the like. The temperatures of various parts of the electric vehicle 1 may be controlled in real time through the thermal management system 100.

The first heat exchange means 110 refers to a device for regulating the temperature of the vehicle interior 20, which may include one or more of a condenser, an evaporator, electric heating means 230, and the like. The condenser is a kind of heat exchanger, which can convert gas or vapor into liquid and quickly transfer heat to the nearby air, the working process of the condenser is an exothermic process, and the vehicle interior may be heated through the condenser. The evaporator is also a kind of heat exchanger, and the low-temperature condensed liquid exchanges heat with the outside air through the evaporator, so that the liquid is gasified and absorbs heat to achieve the effect of cooling the space. The electric heating means 230 refers to a heating device designed with constant temperature heating characteristics of a thermistor, which may heat the vehicle interior by consuming electric energy.

The vehicle interior 20 may be a passenger compartment on the vehicle for accommodating people.

The second heat exchange means 120 refers to a device for regulating the temperature of the battery 10, for example, it may be a battery heat exchanger. The battery heat exchanger generally includes a refrigerant channel and a battery cooling liquid channel, and controls the temperature of the battery through heat exchange between a refrigerant and a battery cooling liquid.

Generally, if the battery 10 is in a low-temperature state, attenuation of its available energy and power will be relatively severe, and long-term use in the low-temperature state will accelerate the aging of the battery 10 and shorten its service life. The thermal management system 100 for the electric vehicle 1 according to the embodiments of the present application simultaneously regulates the temperatures of the battery 10 and the vehicle interior 20 through the first heat exchange means 110 and the second heat exchange means 120, that is, the vehicle interior thermal management system 100 and the battery thermal management system 110 are properly integrated and designed, which is beneficial to keeping the battery 10 in a normal working temperature range, to improving the energy utilization, and further to increasing a cruising range of the electric vehicle 1.

Specifically, when the first heat exchange means 110 and the second heat exchange means 120 are connected in parallel, the temperatures of the battery 10 and the vehicle interior 20 are simultaneously raised or lowered respectively through the first heat exchange means 110 and the second heat exchange means 120. For example, when an ambient temperature is relatively high, the temperature of the vehicle interior 20 may be lowered through the first heat exchange means 110, and at the same time, the temperature of the battery 10 may be lowered through the second heat exchange means 120. When the first heat exchange means 110 and the second heat exchange means 120 are connected in series, heat exchange may be performed between the first heat exchange means 110 and the second heat exchange means 120, so as to also realize temperature regulation and control of the vehicle interior 20 and the battery 10 at the same time. For example, when the vehicle has just started, the temperature of the battery 10 is relatively low, and in this case, the low-temperature battery 10 may exchange heat with the vehicle interior 20 through the series connection between the first heat exchange means 110 and the second heat exchange means 120, thereby lowering the temperature of the vehicle interior 20 and raising the temperature of the battery 10 quickly until the battery 10 is in a normal working temperature range; or the temperature of the battery 10 is relatively high during the working for a long time, and the heat of the high-temperature battery 10 may be exchanged with that of the vehicle interior 20 through the series connection between the first heat exchange means 110 and the second heat exchange means 120, thereby recovering the heat of the battery 10 for heating the vehicle interior 20, and further improving the energy utilization. Therefore, through the thermal management system 100 according to the embodiments of the present application, it is beneficial to keeping the battery 10 in the normal working temperature range, to improving the energy utilization, and further to increasing the cruising range of the electric vehicle 1.

In some embodiments of the present application, the thermal management system 100 includes a battery first loop 130, the battery first loop 130 includes the battery 10 and the second heat exchange means 120, and the battery 10 and the second heat exchange means 120 are coupled in series or are not coupled through a first four-way valve 140 and a second four-way valve 150 respectively.

The battery 10 and the second heat exchange means 120 together form the battery first loop 130, and the battery 10 is connected with the second heat exchange means 120 through the first four-way valve 140 and the second four-way valve 150.

The first four-way valve 140 and the second four-way valve 150 refer to valve switches that have four outlets and are switchable to communicate a loop. The two four-way valves have multiple working states, thereby realizing the series connection or no connection between the battery 10 and the second heat exchange means 120. For example, when the battery 10 and the second heat exchange means 120 are connected in series, that is, the two four-way valves communicate the battery 10 and the second heat exchange means 120 respectively, in this case, the second heat exchange means 120 may raise or lower the temperature of the battery 10. When the battery 10 and the second heat exchange means 120 are not connected, that is, after the communication positions of the two four-way valves are switched so that the battery 10 is not connected with the second heat exchange means 120, the temperature of the battery 10 is not regulated and controlled through the second heat exchange means 120.

By providing the two four-way valves, multiple modes of temperature regulation and control of the electric vehicle can be realized, which is beneficial to reducing complexity of the thermal management system.

Further, the terminal management system 100 further includes a motor 40 configured to drive the electric vehicle 1, and in the thermal management system 100, the motor 40 and the battery 10 are coupled in series or are not coupled through the first four-way valve 140 and the second four-way valve 150.

The motor 40 refers to means that converts electric energy into mechanical energy and serves as a power source of a power consumption device or various machines. In the embodiments of the present application, the motor 40 serves as driving means of the electric vehicle 1 to drive the vehicle to run. Certainly, in some embodiments, in addition to converting electric energy into mechanical energy and driving the vehicle to run, the motor 40 may recover mechanical energy when the electric vehicle 1 is braking, and convert the mechanical energy into electric energy to transfer it to the battery. The motor 40 may be a direct current motor, an alternating current asynchronous motor, a permanent magnet synchronous motor, or the like, which is not limited in the present application.

When the motor 40 and the battery 10 are connected in series, the temperature of the battery 10 may be regulated through the temperature generated during the working of the motor 40, thereby realizing heat recovery; and when the motor 40 and the battery 10 are not connected, the temperature of the battery 10 may be regulated and controlled through the first heat exchange means 110 or the second heat exchange means 120. That is, according to the thermal management system 100 of the present application, the motor 40 is properly integrated and designed, which is beneficial to further improving the energy utilization, and further to increasing the cruising range of the electric vehicle 1.

Further, the thermal management system 100 further includes third heat exchange means 160, the third heat exchange means 160 and the first heat exchange means 110 are coupled in series, the third heat exchange means 160 is configured to exchange heat between a refrigerant and outdoor air, the first heat exchange means 110 is configured to regulate the temperature of the vehicle interior 20 through refrigerant circulation, and the second heat exchange means 120 is configured to regulate the temperature of the battery 10 through the refrigerant circulation.

The third heat exchange means 160 refers to a device for exchanging heat with the outdoor air, which may be an outdoor condenser or an evaporator. The condenser is configured to release heat to the outside air, and the evaporator is configured to absorb heat to the outside air.

By providing the third heat exchange means 160, the heat of the vehicle interior 20 and the battery 10 can be released to the outdoor air, or the heat of the outdoor air can be transferred to the vehicle interior 20 and the battery 10, thereby regulating the temperatures of the vehicle interior 20 and the battery 10.

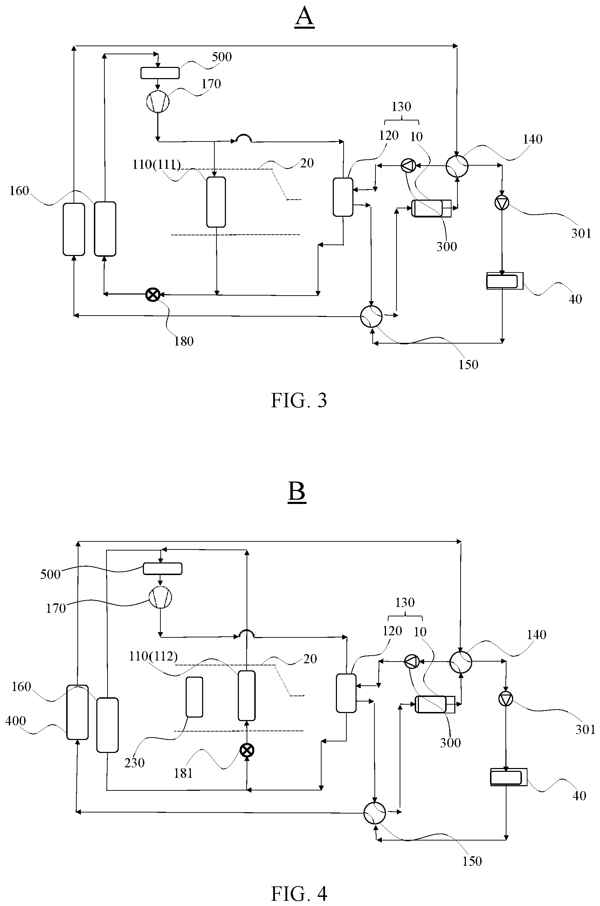

In some embodiments of the present application, the thermal management system 100 has a first working mode A. With reference to FIG. 2 and FIG. 3, in a case that the thermal management system 100 is in the first working mode A, the third heat exchange means 160 absorbs heat from the outdoor air, the first heat exchange means 110 releases heat to the vehicle interior 20, the second heat exchange means 120 releases heat, and the battery first loop 130 is on to heat the battery 10 through the second heat exchange means 120.

In the first working mode A, the third heat exchange means 160 transfers the heat in the outside air to the vehicle interior 20 and the battery 10, thereby realizing that the battery 10 and the vehicle interior 20 can be heated simultaneously. The first working mode A is suitable for the situation that the vehicle is in a low-temperature environment. When the vehicle is in a low-temperature environment, the thermal management system 100 heats the vehicle interior 20 and the battery 10 simultaneously through the first working mode A. On the one hand, it realizes heat supply to the passenger compartment, and on the other hand, it can avoid the reduction of discharge capacity of the battery 10 due to the low temperature.

Further, the motor 40 and the battery 10 are not coupled in the case that the thermal management system 100 is in the first working mode A.

The fact that the motor 40 and the battery 10 are not connected refers to that the motor 40 and the battery 10 are not related. In this case, the second heat exchange means 120 only heats the battery 10, which is beneficial to speeding up the heating efficiency of the battery 10. Meanwhile, it is also beneficial to avoiding overheating of the motor 40.

In some embodiments of the present application, the first heat exchange means 110 includes an indoor condenser 111; the thermal management system 100 further includes a compressor 170 and first throttling means 180; and in the case that the thermal management system 100 is in the first working mode A, the compressor 170, the indoor condenser 111, the first throttling means 180 and the third heat exchange means 160 are coupled in sequence to form a first refrigerant heating circulation loop; and the compressor 170, the second heat exchange means 120, the first throttling means 180 and the third heat exchange means 160 are coupled in sequence to form a second refrigerant heating circulation loop.

The compressor 170 refers to a driven fluid machine that raises low-pressure gas to high-pressure gas. The compressor 170 suctions a low-temperature and low-pressure refrigerant from a suction port, compresses it by driving a piston through the operation of the motor, and then discharges the high-temperature and high-pressure refrigerant to an exhaust port to provide power for cooling or heating circulation.

The throttling means refers to means that controls the flow quantity of fluid by changing a throttling section or throttling length, which is essentially flow quantity control means. The throttling means reduces the pressure of the high-pressure liquid through the action of throttling. Common throttling means include capillary tubes, throttling valves, and the like. Usually, the throttling means may adjust the flow quantity of liquid according to the load, thereby controlling the cooling or heating effect.

The refrigerant, which is also referred to as a coolant, is a substance that easily absorbs heat and becomes gas, and easily releases heat and becomes liquid. Through the conversion between a gaseous state and a liquid state of the refrigerant, heat exchange in different spaces can be realized. For example, the refrigerant absorbs heat when vaporizing in the evaporator, and releases heat when condensing in the condenser. At present, there are many kinds of refrigerants, commonly used are ammonia, Freon, water and a few hydrocarbons.

The embodiments of the present application specifically illustrate a working manner of the first working mode A. Ambient heat may be absorbed through the first refrigerant heating circulation loop and the second refrigerant heating circulation loop, and then the battery 10 and the vehicle interior 20 are heated simultaneously. The working process of a circulation of the first working mode A is as follows: the first heat exchange means 110 includes an indoor condenser 111. The compressor 170 compresses and drives the refrigerant, which is a substance that easily absorbs heat and becomes gas, and easily releases heat and becomes liquid. In this case, the refrigerant is in a gaseous state with high temperature and high pressure. Then, the refrigerant is sent to the indoor condenser 111 and the second heat exchange means 120 respectively, and further releases heat to the vehicle interior 20 and the second heat exchange means 120 respectively, and the second heat exchange means 120 is also in communication with the battery 10 through the first four-way valve 140 and the second four-way valve 150, so as to heat the vehicle interior 20 and the battery 10 simultaneously. In this case, the temperatures of the vehicle interior 20 and the battery 10 rises, and the refrigerant becomes in a liquid state with high pressure and low temperature. After this, after passing through the first throttling means 180 and becoming in a liquid state with low pressure and low temperature, the refrigerant coming out of the indoor condenser 111 and the second heat exchange means 120 flows through the third heat exchange means 160, the third heat exchange means 160 may be an outdoor evaporator, and after absorbing the ambient heat through the third heat exchange means 160, the refrigerant is vaporized into gas and enters the compressor 170 to continue the next circulation. In the continuous circulation process, the battery 10 and the vehicle interior 20 may be heated simultaneously. Further, the thermal management system 100 further includes a first liquid pump 300, and the first liquid pump 300 is disposed in the battery first loop 130. The first liquid pump 130 may provide power to drive the liquid in the battery first loop 130 to flow, which is beneficial to the sufficient heat exchange between the battery 10 and the second heat exchange means 120 through the liquid. The liquid pump may be a gear pump, a vane pump, a plunger pump, or the like; and the liquid may be the cooling liquid in the battery first loop 130 or a liquid with good heat transfer properties such as water.

In some embodiments of the present application, the thermal management system 100 has a second working mode B. With reference to FIG. 2 and FIG. 4, in a case that the thermal management system 100 is in the second working mode B, the first heat exchange means 110 absorbs heat from the vehicle interior 20, the second heat exchange means 120 releases heat, and the first battery 10 loop is on to heat the battery 10 through the second heat exchange means 120.

In the second working mode B according to the embodiments of the present application, the first heat exchange means 110 and the second heat exchange means 120 are connected in series, and the second heat exchange means 120 and the battery 10 communicate, so that the first heat exchange means 110 exchanges heat with the second heat exchange means 120 to heat the battery 10. The second working mode B is suitable for the situation that the vehicle is in a low-temperature environment. When the vehicle is in a low-temperature environment, the thermal management system 100 heats the battery 10 by absorbing the temperature of the vehicle interior 20 (passenger compartment) through the second working mode B. When the vehicle has just started, the second working mode B may be adopted in order to heat up the battery 10 relatively quickly, so that the battery 10 quickly returns to a good working temperature range. The thermal management system 100 may be switched back to the first working mode A after the vehicle is started for a period of time.

Further, the motor 40 and the battery 10 are not coupled in the case that the thermal management system 100 is in the second working mode B. In this case, the second heat exchange means 120 only heats the battery 10, which is beneficial to speeding up the heating efficiency of the battery 10. Meanwhile, it is also beneficial to avoiding overheating of the motor 40.

In some embodiments of the present application, the first heat exchange means 110 includes an evaporator 112; the thermal management system 100 further includes a compressor 170 and second throttling means 181; and in the case that the thermal management system 100 is in the second working mode B, the compressor 170, the second heat exchange means 1120, the second throttling means 181 and the evaporator 112 are coupled in sequence to form a third refrigerant heating circulation loop.

The embodiments of the present application specifically illustrate a working manner of the second working mode B. The heat of the vehicle interior 20 may be absorbed through the third refrigerant heating circulation loop in a low-temperature environment, and then the battery 10 is heated. The working process of a circulation of the second working mode B is as follows: the first heat exchange means 110 includes the evaporator 112, the compressor 170 compresses and drives the refrigerant, and in this case, the refrigerant is in a gaseous state with high temperature and high pressure. Then, the refrigerant is sent to the second heat exchange means 120 and releases heat to the second heat exchange means 120, and the second heat exchange means 120 is also in communication with the battery 10 through the first four-way valve 140 and the second four-way valve 150, so that the second heat exchange means 120 heats the battery 10, and in this case, the temperature of the battery 10 rises, and the refrigerant becomes in a liquid state with high pressure and low temperature after releasing the heat. After this, after passing through the second throttling means 181 and becoming in a liquid state with low pressure and low temperature, the refrigerant coming out of the second heat exchange means 120 flows through the evaporator 112 of the vehicle interior 20, and after absorbing the heat of the vehicle interior 20 through the evaporator 112, the refrigerant is vaporized into gas and enters the compressor 170 to continue the next circulation. According to the embodiments of the present application, the battery 10 is heated using the heat of the vehicle interior 20, so that the battery 10 is at a good working temperature, which is beneficial to reducing the probability of occurrence of energy and exothermic power attenuation of the battery 10, improving the service life of the battery 10, and further ensuring the normal power supply of the electric vehicle 1. Further, the thermal management system 100 further includes electric heating means 230, and the electric heating means 230 is configured to supply heat to the vehicle interior 20 by means of electric heating. By providing the electric heating means 230, the temperature of the vehicle interior 20 can be raised to avoid an excessive heat loss of the vehicle interior 20.

Further, the thermal management system 100 further includes a first liquid pump 300, and the first liquid pump 300 is disposed in the battery first loop 130.

The first liquid pump 300 may provide power to drive the liquid in the battery first loop 130 to flow, which is beneficial to the sufficient heat exchange between the battery 10 and the second heat exchange means 120.

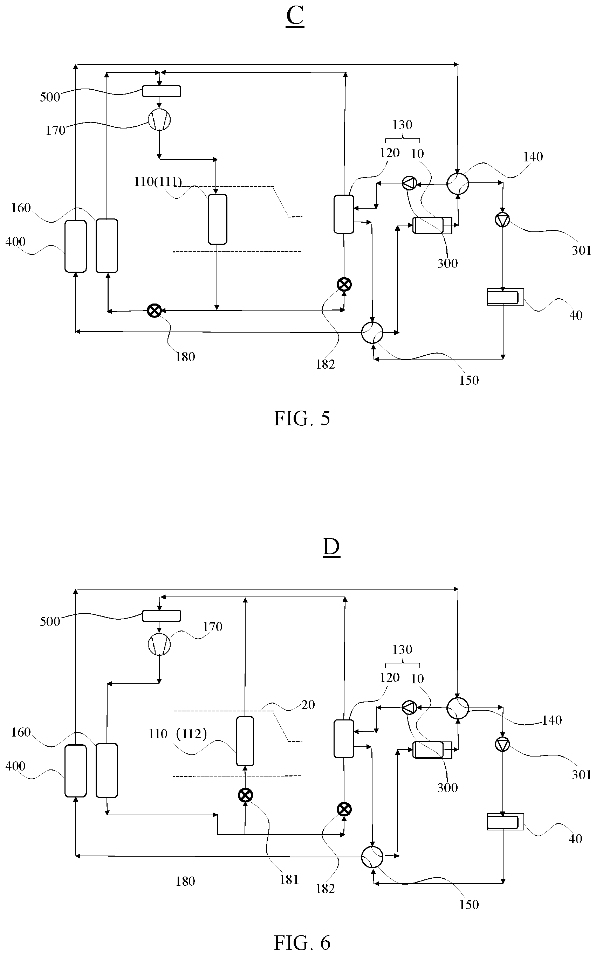

In some embodiments of the present application, the thermal management system 100 has a third working mode C. With reference to FIG. 2 and FIG. 5, in a case that the thermal management system 100 is in the third working mode C, the third heat exchange means 160 absorbs heat from the outdoor air, the first heat exchange means 110 releases heat to the vehicle interior 20, the second heat exchange means 120 absorbs heat, and the battery 10 and the second heat exchange means 120 are not coupled.

In the third working mode C, the battery 10 and the second heat exchange means 120 are not connected, both the third heat exchange means 160 and the second heat exchange means 120 absorb the heat of the external air and transfer it to the vehicle interior 20, thereby realizing the heating of the vehicle interior 20.

Further, the thermal management system 100 further includes a heat exchange water tank 400, and the heat exchange water tank 400 and the second heat exchange means 120 are coupled in series or are not coupled through the first four-way valve 140 and the second four-way valve 150; and in the case that the thermal management system 100 is in the third working mode C, the heat exchange water tank 400 and the second heat exchange means 120 are coupled in series.

The heat exchange water tank 400 cools the motor 40 through water circulation, and it is heat exchange means that ensures the continuous working of the motor 40 within a normal temperature range. Usually, the heat exchange water tank 400 is equipped with a fan, and through the blowing effect of the fan, the heat exchange water tank 400 continuously dissipates the heat of the motor 40 to the external air through the water circulation.

In the third working mode C, the second heat exchange means 120 is also connected with the heat exchange water tank 400 in series, and in this case, the second heat exchange means 120 may exchange heat with the heat exchange water tank 400. That is, the second heat exchange means 120 may absorb the heat of the heat exchange water tank 400 to heat the vehicle interior 20.

In some embodiments of the present application, the motor 40 and the battery 10 are coupled in series in the case that the thermal management system 100 is in the third working mode C.

In the third working mode C, the battery 10 is not in communication with the second heat exchange means 120 but is in communication with the motor 40 through the first four-way valve 140 and the second four-way valve 150, and in this way, the heat generated during the working of the motor 40 may heat the battery 10, thereby recovering the heat of the motor 40, which is beneficial to improving the energy utilization of the thermal management system.

The third working mode C is suitable for the situation that the vehicle is in a low-temperature environment. When the vehicle is in a low-temperature environment, the thermal management system 100 heats the vehicle interior 20 through the third working mode C, thereby realizing heat supply to the passenger compartment. In addition, in the third working mode C, the battery 10 is heated by the heat generated during the working of the motor 40, and thus, the reduction of discharge capacity of the battery 10 can be avoided due to the low temperature while the heat of the motor 40 is recovered and reused.

Specifically, the first heat exchange means 110 includes an indoor condenser 111; the thermal management system 100 further includes a compressor 170, first throttling means 180, and the third throttling means 181; and in the case that the thermal management system 100 is in the third working mode C, the compressor 170, the indoor condenser 111, the first throttling means 180 and the third heat exchange means 160 are coupled in sequence to form a first refrigerant heating circulation loop; and the compressor 170, the indoor condenser 111, the third throttling means 181 and the second heat exchange means 120 are coupled in sequence to form a fourth refrigerant heating circulation loop.

The embodiments of the present application specifically illustrate a working manner of the working mode three, in which external heat is absorbed through the first refrigerant heating circulation loop and the fourth refrigerant heating circulation loop, and then the vehicle interior 20 is heated. The working process of one circulation of the third working mode C is as follows: the first heat exchange means 110 includes the indoor condenser 111, and the indoor condenser 111 and the second heat exchange means 120 are connected in parallel. The compressor 170 compresses and drives the refrigerant, and in this case, the refrigerant is in a gaseous state with high temperature and high pressure. Then, the refrigerant is sent to the indoor condenser 111 and releases heat to the vehicle interior 20, and in this case, the temperature o the vehicle interior 20 rises, and the refrigerant becomes in a liquid state with high pressure and low temperature after releasing the heat. After this, the refrigerant coming out of the indoor condenser 111 flows through two paths. The first path is: after passing through the first throttling means 180 and becoming in a liquid state with low pressure and low temperature, the refrigerant flows through the third heat exchange means 160, and after absorbing the heat of the external environment through the third heat exchange means 160, the refrigerant is vaporized into gas and enters the compressor 170 to continue the next circulation; and the second path is: after passing through the third throttling means 160 and becoming in a liquid state with low pressure and low temperature, the refrigerant flows through the second heat exchange means 120, and after absorbing the heat of the external environment such as the heat of the liquid in the pipeline through the second heat exchange means 120, the refrigerant is vaporized into gas and enters the compressor 170 to continue the next circulation. That is, the refrigerant absorbs the outdoor heat on the two branch loops simultaneously to heat the vehicle interior 20, which is beneficial to improving the heating efficiency of the vehicle interior 20.

In some embodiments of the present application, the thermal management system 100 further includes a first liquid pump 300, and the first liquid pump 300 is disposed between the second heat exchange means 120 and the first four-way valve 140 or between the second heat exchange means 120 and the second four-way valve 150; and in the case that the thermal management system 100 is in the third working mode C, the first liquid pump 300 is configured to provide power for water circulation between the heat exchange water tank 400 and the second heat exchange means 120.

In the third working mode C, the position of the first liquid pump 300 may be selected according to actual situations. Providing the first liquid pump 300 is beneficial to the sufficient heat exchange between the second heat exchange means 120 and the heat exchange water tank 400, so that the heat absorbed by the heat exchange water tank 400 is transferred to the second heat exchange means 120 through water circulation, and then transferred to the vehicle interior 20 through the refrigerant in the second heat exchange means 120 to heat the vehicle interior 20. Thereby, it is beneficial to further improving the energy utilization.

In some embodiments of the present application, the thermal management system 100 further includes a second liquid pump 301, and the second liquid pump 301 is disposed between the motor 40 and the first four-way valve 140 or between the motor 40 and the second four-way valve 150; and in the case that the thermal management system 100 is in the third working mode C, the second liquid pump 301 is configured to provide power for water circulation between the motor 40 and the battery 10.

In the third working mode C, the position of the second liquid pump 301 may be selected according to actual situations.

Providing the second liquid pump 301 is beneficial to the sufficient heat exchange between the battery 10 and the motor 40, so that the heat generated during the working of the motor is transferred to the battery 10 through water circulation to heat the battery 10. Thereby, it is beneficial to further improving the energy utilization.

In some embodiments of the present application, the thermal management system 100 has a fourth working mode D. With reference to FIG. 2 and FIG. 6, in a case that the thermal management system 100 is in the fourth working mode D, the third heat exchange means 160 releases heat to the outdoor air, the first heat exchange means 110 absorbs heat from the vehicle interior 20, the second heat exchange means 120 absorbs heat, and the battery first loop 130 is on to cool the battery 10 through the second heat exchange means 120.

In the fourth working mode D, the second heat exchange means 120 the battery 10 communicate. The first heat exchange means 110 and the second heat exchange means 120 respectively transfer the heat of the vehicle interior 20 and the battery 10 to the outside air, thereby lowering the temperatures of the battery 10 and the vehicle interior 20 simultaneously. The fourth working mode D is suitable for the situation that the vehicle is in a high-temperature environment. When the vehicle is in a high-temperature environment, the thermal management system 100 lowers the temperatures of the vehicle interior 20 and the battery 10 simultaneously through the fourth working mode D. On the one hand, cooling of the passenger compartment is realized, and on the other hand, cooling is performed on the battery 10 to avoid overheating of the battery 10 to not cause safety hazards.

Further, the thermal management system 100 further includes a heat exchange water tank 400, and the heat exchange water tank 400 and the second heat exchange means 120 are coupled in series or are not coupled through the first four-way valve 140 and the second four-way valve 150; and in the case that the thermal management system 100 is in the fourth working mode D, the motor 40 and the battery 10 are not coupled, the heat exchange water tank 400 and the second heat exchange means 120 are not coupled, and the heat exchange water tank 400 and the motor 40 are coupled in series.

In the fourth working mode D, according to the embodiments of the present application, by providing the heat exchange water tank 400, the heat dissipation requirement of the motor 40 is realized. Since the motor 40 and the heat exchange water tank 400 are connected in series, the high heat generated by the motor 40 circulates to the heat exchange water tank 40 through water circulation, and then the heat exchange water tank 400 transfers the heat to the air, thereby dissipating the heat from the motor 40 and keeping the motor 40 in a normal working temperature range. In this way, it is beneficial to improving the service life of the motor 40.

In some embodiments of the present application, the first heat exchange means 110 includes an evaporator 112; the thermal management system 100 further includes a compressor 170, second throttling means 181, and third throttling means 181; and in the case that the thermal management system 100 is in the fourth working mode D, the compressor 170, the third heat exchange means 160, the second throttling means 181 and the evaporator 112 are coupled in sequence to form a fifth refrigerant heating circulation loop; and the compressor 170, the third heat exchange means 160, the third throttling means 181 and the second heat exchange means 120 are coupled in sequence to form a sixth refrigerant heating circulation loop.

The embodiments of the present application specifically illustrate a working manner of the fourth working mode D, in which the heat of the vehicle interior 20 and the battery 10 may be absorbed through the fifth refrigerant heating circulation loop and the sixth refrigerant heating circulation loop in a high-temperature environment, so as to lower the temperatures of the battery 10 and the vehicle interior 20. The working process of one circulation of the fourth working mode D is as follows: the first heat exchange means 110 includes the evaporator 112, and the evaporator 112 and the second heat exchange means 120 are connected in parallel. The compressor 170 compresses and drives the refrigerant, and in this case, the refrigerant is in a gaseous state with high temperature and high pressure. Then, the refrigerant is sent to the third heat exchange means 160 and releases heat to the outside air, and in this case, the refrigerant becomes in a liquid state with high pressure and low temperature after releasing the heat. After this, the refrigerant in the liquid state with high pressure and low temperature coming out of the third heat exchange means 160 flows through two paths. The first path is: after passing through the second throttling means 181 and becoming in a liquid state with low pressure and low temperature, the refrigerant flows through the evaporator 112, after absorbing the heat of the vehicle interior 20 through the evaporator 112, the refrigerant is vaporized into gas and enters the compressor 170 to continue the next circulation, and in this case, the temperature of the vehicle interior 20 decreases. The second path is: after passing through the third throttling means 181 and becoming in a liquid state with low pressure and low temperature, the refrigerant flows through the second heat exchange means 120, the second heat exchange means 120 is in communication with the battery 10 through the first four-way valve 140 and the second four-way valve 150, that is, the battery first loop 130 is on, therefore, after absorbing the heat of the battery 10 through the second heat exchange means 120, the refrigerant is vaporized into gas and enters the compressor 170 to continue the next circulation, and in this case, the temperature of the vehicle interior 20 decreases.

In some embodiments of the present application, the thermal management system 100 further includes a first liquid pump 300 and a second liquid pump 310, the first liquid pump 300 is disposed between the second heat exchange means 120 and the first four-way valve 140 or between the second heat exchange means 120 and the second four-way valve 150, and the second liquid pump 301 is disposed between the motor 40 and the first four-way valve 140 or between the motor 40 and the second four-way valve 150; and in the case that the thermal management system 100 is in the fourth working mode D, the first liquid pump 300 is configured to provide power for water circulation between the battery 10 and the second heat exchange means 120, and the second liquid pump 301 is configured to provide power for water circulation between the motor 40 and the heat exchange water tank 400.

Providing the first liquid pump 300 is beneficial to the sufficient heat exchange between the second heat exchange means 120 and the battery 10, so that the heat generated during the working of the battery 10 is transferred to the second heat exchange means 120 through water circulation, and then the heat is released to the outside air through the heat exchange between the heat exchange means 120 and the refrigerant, which is beneficial to ensuring that the battery is in a normal working temperature range.

Providing the second liquid pump 301 is beneficial to the sufficient heat exchange between the motor 40 and the heat exchange water tank 400, so that the heat generated during the working of the motor 40 is transferred to the heat exchange water tank 400 through water circulation to dissipate heat from the motor 40. Thereby, it is beneficial to improving reliability of the motor 40.

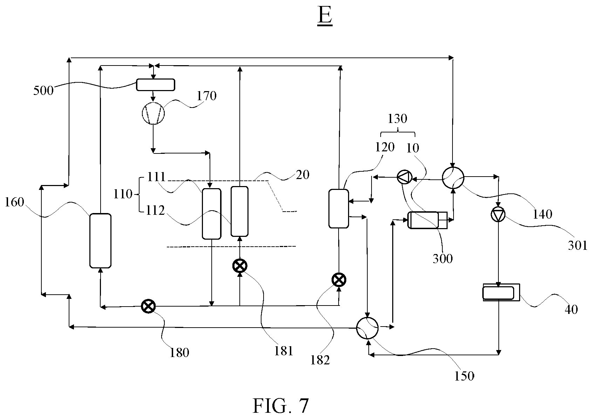

In some embodiments of the present application, the thermal management system 100 has a fifth working mode E. with reference to FIG. 2 and FIG. 7, in a case that the thermal management system 100 is in the fifth working mode E, the first heat exchange means 110 releases heat to the vehicle interior 20 while absorbing heat from the vehicle interior 20 to dehumidify the vehicle interior 20, the third heat exchange means 160 absorbs heat from the outdoor air, the second heat exchange means 120 absorbs heat, and the battery 10 and the second heat exchange means 120 are coupled in series to recover heat of the battery 10 through the second heat exchange means 120.

In the fifth working mode E, the second heat exchange means 120 and the battery 10 are connected in series, and the first heat exchange means 110 exchanges heat with the third heat exchange means 160 and the second heat exchange means 120 respectively, thereby transferring the heat of the outdoor air and the heat of the battery 10 to the vehicle interior 20 to heat the vehicle interior 20, which also realizes the recovery of battery heat, and is beneficial to improving the energy utilization. Meanwhile, the first heat exchange means 110 may further dehumidify the vehicle interior 20.

The fifth working mode E is suitable for the situation that the vehicle is in a medium-temperature environment, and the fifth working mode E may also be referred to as a passenger compartment dehumidification mode. The thermal management system 100 dehumidifies the passenger compartment through the fifth working mode E. On the other hand, the heat generated during the working of the battery 10 is recovered through the second heat exchange means 120, which can promote the state conversion of the refrigerant, thereby saving the energy consumption of the thermal management system 100.

Further, the motor 40, the battery 10 and the second heat exchange means 120 are coupled in series in the case that the thermal management system 100 is in the fifth working mode E.

With such an arrangement, the heat generated during the working of the motor 40 may be transferred to the refrigerant through the second heat exchange means 120 for recovery, which is beneficial to further improving the energy utilization.

In some embodiments of the present application, the first heat exchange means 110 includes an indoor condenser 111 and an evaporator 112; the thermal management system 100 further includes a compressor 170, first throttling means 180, second throttling means 181, and third throttling means 181; and in the case that the thermal management system 100 is in the fifth working mode E, the compressor 170, the indoor condenser 111, the first throttling means 180 and the third heat exchange means 160 are coupled in sequence to form a first refrigerant heating circulation loop; the compressor 170, the indoor condenser 111, the second throttling means 181 and the evaporator 112 are coupled in sequence to form a seventh refrigerant heating circulation loop; and the compressor 170, the indoor condenser 111, the third throttling means 181 and the second heat exchange means 120 are coupled in sequence to form an eighth refrigerant heating circulation loop.

The embodiments of the present application specifically illustrate a working manner of the fifth working mode E. The first refrigerant heating circulation loop may absorb the heat of the outside air, thereby heating the vehicle interior 20; the seventh refrigerant heating circulation loop may absorb vapor of the vehicle interior 20, thereby dehumidifying the vehicle interior 20; and the eighth refrigerant heating circulation loop may absorb the heat of the battery 10 and the motor 40, thereby heating the vehicle interior 20, that is, the eighth refrigerant heating circulation loop recovers the heat of the battery 10 and the motor 40. The working process of one circulation of the fifth working mode E is as follows: the first heat exchange means 110 includes the indoor condenser 111 and the evaporator 112, and the third heat exchange means 160, the evaporator 120 and the second heat exchange means 120 are connected in parallel. The compressor 170 compresses and drives the refrigerant, and in this case, the refrigerant is in a gaseous state with high temperature and high pressure. Then, the refrigerant is sent to the indoor condenser 111 and releases heat to the vehicle interior 20, and in this case, the temperature of the vehicle interior 20 rises, and the refrigerant becomes in a liquid state with high pressure and low temperature after releasing the heat. After this, the refrigerant coming out of the indoor condenser 111 flows through three paths. The first path is: after passing through the first throttling means 180 and becoming in a liquid state with low pressure and low temperature, the refrigerant flows through the third heat exchange means 160, and after absorbing the heat of the external environment through the third heat exchange means 160, the refrigerant is vaporized into gas and enters the compressor 170 to continue the next circulation; the second path is: after passing through the second throttling means 181 and becoming in a liquid state with low pressure and low temperature, the refrigerant flows through the evaporator 112, in this case, since the evaporator has the low-temperature refrigerant, the vapor of the vehicle interior 20 is cooled and liquefied after passing through the evaporator 112, thereby dehumidifying the vehicle interior 20, and after absorbing the heat of the vehicle interior 20 through the evaporator 112, the refrigerant is vaporized into gas and enters the compressor 170 to continue the next circulation; and the third path is: after passing through the third throttling means and becoming in a liquid state with low pressure and low temperature, the refrigerant flows through the second heat exchange means 120, the second heat exchange means 120 is connected with the motor 40 and the battery 10 in serine, therefore, after absorbing the heat of the battery 10 and the motor 40 through the second heat exchange means 120, the refrigerant is vaporized into gas and enters the compressor 170 to continue the next circulation, and in this case, the heat of the battery 10 and the motor 40 may be used to heat the vehicle interior 20, that is, the heat recovery of the battery 10 and the motor 40 can be realized.

In some embodiments of the present application, the thermal management system 100 further includes a first liquid pump 300 and a second liquid pump 301, the first liquid pump 300 is disposed between the second heat exchange means 120 and the first four-way valve 140 or between the second heat exchange means 120 and the second four-way valve 150, and the second liquid pump 301 is disposed between the motor 40 and the first four-way valve 140 or between the motor 40 and the second four-way valve 150; and in the case that the thermal management system 100 is in the fourth working mode D, both the first liquid pump 300 and the second liquid pump 301 are configured to provide power for water circulation between the battery 10, the motor 40 and the second heat exchange means 120.

Providing the first liquid pump 300 and the second liquid pump 301 is beneficial to the sufficient heat exchange between the second heat exchange means 120, the battery 10, and the motor 40.

In some embodiments of the present application, the thermal management system 100 further includes a gas-liquid separator 500. The gas-liquid separator is configured to separate the liquid refrigerant from the gas refrigerant, so that the dry gas refrigerant enters the compressor 170.

As shown in FIG. 2, in some embodiments of the present application, the thermal management system 100 further includes a three-way water valve 700 located between the heat exchange water tank 400 and the second four-way valve 150. By providing the three-way water valve 700, it is possible to allow the liquid for water circulation to select whether to flow through the heat exchange water tank, which is beneficial to reducing complexity of the thermal management system 100.

As shown in FIG. 2, in some embodiments of the present application, the thermal management system 100 further includes a first switch 601 disposed between an inlet of the compressor 170 and the third heat exchange means 160, a second switch 602 disposed between the indoor condenser 111 and an outlet of the compressor 170, a third switch 603 disposed between the evaporator 112 and the second heat exchange means 120, a fourth switch 604 disposed between the outlet of the compressor 170 and the second heat exchange means 120, a fifth switch 605 disposed between the second heat exchange means 120 and the inlet of the compressor 170, and a sixth switch 606 disposed between the outlet of the compressor 170 and the third heat exchange means 160. Providing multiple path switches is beneficial to controlling working states of each component in each working mode conveniently.

As shown in FIG. 2, in some embodiments of the present application, the thermal management system 100 further includes a first one-way valve 801, a second one-way valve 802, and a third one-way valve 803. The first one-way valve 801 is configured to conduct a direction from the third heat exchange means 160 to the first heat exchange means 110, and the first one-way valve 801 and the first throttling means 180 are connected in parallel; the second one-way valve 802 is configured to conduct a direction from the first heat exchange means 110 to the third heat exchange means 160, and the second one-way valve 802 and the first throttling means 180 are connected in series; and the third one-way valve 803 is configured to conduct a direction from the second heat exchange means 120 to the third heat exchange means 160, and the third one-way valve 803 and the third throttling means 182 are connected in parallel.

A one-way valve refers to a valve that is on in one direction and is off in the opposite direction. Providing multiple one-way valves is beneficial to controlling an on or off state of each component in a specific direction in each working mode conveniently.

Based on the multiple working modes of the thermal management system 100 described above, an embodiment of the present application provides a thermal management system 100, as specifically shown in FIG. 1. The thermal management system 100 includes a gas-liquid separator 500, a compressor 170, an indoor condenser 111, an evaporator 112, electric heating means 230, third heat exchange means 160, second heat exchange means 120, a battery 10, a motor 40, a first four-way valve 140, a second four-way valve 150, a heat exchange water tank 400, a three-way water valve 700, a first liquid pump 300, a second liquid pump 301, a first switch 601, a second switch 602, and a third switch 603, a fourth switch 604, a fifth switch 605, a sixth switch 606, a first one-way valve 801, a second one-way valve 802, a third one-way valve 803, first throttling means 180, second throttling means 181, and third throttling means 182. The thermal management system according to the embodiment of the present application includes at least the aforementioned five working modes, and the free switching of each working mode can be realized by switching states of the multiple switches, the three-way valve and the two four-way valves.

When working in the first working mode A, the first switch 601, the second switch 602 and the fourth switch 604 are turned on, and the third switch 603, the fifth switch 605 and the sixth switch 606 are turned off; and the battery 10 is in communication with the second heat exchange means 120 through the first four-way valve 140 and the second four-way valve 150.

When working in the second working mode B, the fourth switch 604 and the third switch 603 are turned on, and the first switch 601, the second switch 602, the fifth switch 605 and the sixth switch 606 are turned off; and the battery 10 is in communication with the second heat exchange means 120 through the first four-way valve 140 and the second four-way valve 150.

When working in the third working mode C, the first switch 601, the second switch 602 and the fifth switch 605 are turned on, and the third switch 603, the fourth switch 604 and the sixth switch 606 are turned off; and the second heat exchange means 120 is in communication with the heat exchange water tank 400 through the first four-way valve 140, the second four-way valve 150 and the three-way valve 700.

When working in the fourth working mode D, the third switch 603, the fifth switch 605 and the sixth switch 606 are turned on, and the first switch 601, the second switch 602 and the fourth switch 604 are turned off; the battery 10 is in communication with the second heat exchange means 120 through the first four-way valve 140 and the second four-way valve 150; and the motor 40 is in communication with the heat exchange water tank 400 through the first four-way valve 140, the second four-way valve 150 and the three-way valve 700.

When working in the fifth working mode E, the first switch 601, the second switch 602, the third switch 603 and the fifth switch 605 are turned on, and the second switch 602 and the sixth switch 606 are turned off; the battery 10, the motor 40 and the second heat exchange means 120 are connected in series through the first four-way valve 140 and the second four-way valve 150; and the three-way valve 700 does not allow water circulation to pass through the heat exchange water tank 400.

Through the thermal management system 100 according to the embodiment of the present application, it is beneficial to keeping the battery 10 in the normal working temperature range, to improving the energy utilization, and further to increasing the cruising range of the electric vehicle 1.

In a second aspect of the present application, an electric vehicle 1 is provided, including the thermal management system 100 in the above first aspect.

The electric vehicle 1 according to the embodiments of the present application adopts the thermal management system 100 in the above first aspect. The thermal management system 100 simultaneously regulates the temperatures of the battery 10 and the vehicle interior 20 through the first heat exchange means 110 and the second heat exchange means 120, that is, a vehicle interior thermal management system 100 and a battery thermal management system 100 are properly integrated and designed, which is beneficial to keeping the battery 10 in a normal working temperature range, to improving the energy utilization, and further to increasing a cruising range of the electric vehicle 1.

It should finally be noted that the above embodiments are merely intended for describing rather than limiting the technical solutions of the present application. Although the present application is described in detail with reference to the foregoing embodiments, those of ordinary skill in the art should understand that they may still make modifications to the technical solutions described in the foregoing embodiments, or make equivalent substitutions to some or all of the technical features therein; however, these modifications or substitutions do not make the nature of the respective technical solutions depart from the scope of the technical solutions of the embodiments of the present application, and they shall be covered in the scope of the claims and specification of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A thermal management system for an electric vehicle, the electric vehicle comprising a battery for providing electric energy for the electric vehicle, wherein the thermal management system comprises:
first heat exchange means configured to regulate a temperature of a vehicle interior;
and
second heat exchange means configured to regulate a temperature of the battery;
wherein the first heat exchange means and the second heat exchange means are coupled in series or in parallel for simultaneously regulating the temperatures of the vehicle interior and the battery.

2. The thermal management system according to claim 1, wherein the thermal management system comprises a battery first loop, the battery first loop comprises the battery and the second heat exchange means, and the battery and the second heat exchange means are coupled in series or are not coupled through a first four-way valve and a second four-way valve respectively.

3. The thermal management system according to claim 2, further comprising a motor configured to drive the electric vehicle, in the thermal management system, the motor and the battery in series or being not coupled through the first four-way valve and the second four-way valve.

4. The thermal management system according to claim 3, wherein the thermal management system further comprises third heat exchange means, the third heat exchange means and the first heat exchange means are coupled in series, the third heat exchange means is configured to exchange heat between a refrigerant and outdoor air, the first heat exchange means is configured to regulate the temperature of the vehicle interior through refrigerant circulation, and the second heat exchange means is configured to regulate the temperature of the battery through the refrigerant circulation.

5. The thermal management system according to claim 4, wherein the thermal management system has a first working mode; and
in a case that the thermal management system is in the first working mode, the third heat exchange means absorbs heat from the outdoor air, the first heat exchange means releases heat to the vehicle interior, the second heat exchange means releases heat, and the battery first loop is on to heat the battery through the second heat exchange means.

6. The thermal management system according to claim 5, wherein the motor and the battery are not coupled in the case that the thermal management system is in the first working mode.

7. The thermal management system according to claim 5, wherein the first heat exchange means comprises an indoor condenser;
the thermal management system further comprises a compressor and first throttling means; and
in the case that the thermal management system is in the first working mode, the compressor, the indoor condenser, the first throttling means and the third heat exchange means are coupled in sequence to form a first refrigerant heating circulation loop; and the compressor, the second heat exchange means, the first throttling means and the third heat exchange means are coupled in sequence to form a second refrigerant heating circulation loop.

8. The thermal management system according to claim 5, wherein the thermal management system further comprises a first liquid pump, and the first liquid pump is disposed in the battery first loop.

9. The thermal management system according to claim 4, wherein the thermal management system has a second working mode; and
in a case that the thermal management system is in the second working mode, the first heat exchange means absorbs heat from the vehicle interior, the second heat exchange means releases heat, and the first battery loop is on to heat the battery through the second heat exchange means.

10. The thermal management system according to claim 9, wherein the motor and the battery are not coupled in the case that the thermal management system is in the second working mode.

11. The thermal management system according to claim 9, wherein the first heat exchange means comprises an evaporator;
the thermal management system further comprises a compressor and second throttling means; and
in the case that the thermal management system is in the second working mode, the compressor, the second heat exchange means, the second throttling means and the evaporator are coupled in sequence to form a third refrigerant heating circulation loop.

12. The thermal management system according to claim 9, wherein the thermal management system further comprises electric heating means, and the electric heating means is configured to supply heat to the vehicle interior by means of electric heating.

13. The thermal management system according to claim 9, wherein the thermal management system further comprises a first liquid pump, and the first liquid pump is disposed in the battery first loop.

14. The thermal management system according to claim 4, wherein the thermal management system has a third working mode; and
in a case that the thermal management system is in the third working mode, the third heat exchange means absorbs heat from the outdoor air, the first heat exchange means releases heat to the vehicle interior, the second heat exchange means absorbs heat, and the battery and the second heat exchange means are not coupled.

15. The thermal management system according to claim 14, wherein the thermal management system further comprises a heat exchange water tank, and the heat exchange water tank and the second heat exchange means are coupled in series or are not coupled through the first four-way valve and the second four-way valve; and
in the case that the thermal management system is in the third working mode, the heat exchange water tank and the second heat exchange means are coupled in series.

16. The thermal management system according to claim 14, wherein the motor and the battery are coupled in series in the case that the thermal management system is in the third working mode.

17. The thermal management system according to claim 14, wherein the first heat exchange means comprises an indoor condenser;
the thermal management system further comprises a compressor, first throttling means, and third throttling means; and
in the case that the thermal management system is in the third working mode, the compressor, the indoor condenser, the first throttling means and the third heat exchange means are coupled in sequence to form a first refrigerant heating circulation loop; and the compressor, the indoor condenser, the third throttling means and the second heat exchange means are coupled in sequence to form a fourth refrigerant heating circulation loop.

18. The thermal management system according to claim 15, wherein the thermal management system further comprises a first liquid pump, and the first liquid pump is disposed between the second heat exchange means and the first four-way valve or between the second heat exchange means and the second four-way valve; and
in the case that the thermal management system is in the third working mode, the first liquid pump is configured to provide power for water circulation between the heat exchange water tank and the second heat exchange means.

19. The thermal management system according to claim 16, wherein the thermal management system further comprises a second liquid pump, and the second liquid pump is disposed between the motor and the first four-way valve or between the motor and the second four-way valve; and
in the case that the thermal management system is in the third working mode, the second liquid pump is configured to provide power for water circulation between the motor and the battery.

20. The thermal management system according to claim 4, wherein the thermal management system has a fourth working mode; and
in a case that the thermal management system is in the fourth working mode, the third heat exchange means releases heat to the outdoor air, the first heat exchange means absorbs heat from the vehicle interior, the second heat exchange means absorbs heat, and the battery first loop is on to cool the battery through the second heat exchange means.

21. The thermal management system according to claim 20, wherein the thermal management system further comprises a heat exchange water tank, and the heat exchange water tank and the second heat exchange means are coupled in series or are not coupled through the first four-way valve and the second four-way valve; and
in the case that the thermal management system is in the fourth working mode, the motor and the battery are not coupled, the heat exchange water tank and the second heat exchange means are not coupled, and the heat exchange water tank and the motor are coupled in series.

22. The thermal management system according to claim 20, wherein the first heat exchange means comprises an evaporator;
the thermal management system further comprises a compressor, second throttling means, and third throttling means; and
in the case that the thermal management system is in the fourth working mode, the compressor, the third heat exchange means, the second throttling means and the evaporator are coupled in sequence to form a fifth refrigerant heating circulation loop; and the compressor, the third heat exchange means, the third throttling means and the second heat exchange means are coupled in sequence to form a sixth refrigerant heating circulation loop.

23. The thermal management system according to claim 21, wherein the thermal management system further comprises a first liquid pump and a second liquid pump, the first liquid pump is disposed between the second heat exchange means and the first four-way valve or between the second heat exchange means and the second four-way valve, and the second liquid pump is disposed between the motor and the first four-way valve or between the motor and the second four-way valve; and in the case that the thermal management system is in the fourth working mode, the first liquid pump is configured to provide power for water circulation between the battery and the second heat exchange means, and the second liquid pump is configured to provide power for water circulation between the motor and the heat exchange water tank.

24. The thermal management system according to claim 4, wherein the thermal management system has a fifth working mode; and
in a case that the thermal management system is in the fifth working mode, the first heat exchange means releases heat to the vehicle interior while absorbing heat from the vehicle interior to dehumidify the vehicle interior, the third heat exchange means absorbs heat from the outdoor air, the second heat exchange means absorbs heat, and the battery and the second heat exchange means are coupled in series to recover heat of the battery through the second heat exchange means.

25. The thermal management system according to claim 24, wherein the motor, the battery and the second heat exchange means are coupled in series in the case that the thermal management system is in the fifth working mode.

26. The thermal management system according to claim 24, wherein the first heat exchange means comprises an indoor condenser and an evaporator;
the thermal management system further comprises a compressor, first throttling means, second throttling means, and third throttling means; and
in the case that the thermal management system is in the fifth working mode, the compressor, the indoor condenser, the first throttling means and the third heat exchange means are coupled in sequence to form a first refrigerant heating circulation loop; the compressor, the indoor condenser, the second throttling means and the evaporator are coupled in sequence to form a seventh refrigerant heating circulation loop; and the compressor, the indoor condenser, the third throttling means and the second heat exchange means are coupled in sequence to form an eighth refrigerant heating circulation loop.

27. The thermal management system according to claim 25, wherein the thermal management system further comprises a first liquid pump and a second liquid pump, the first liquid pump is disposed between the second heat exchange means and the first four-way valve or between the second heat exchange means and the second four-way valve, and the second liquid pump is disposed between the motor and the first four-way valve or between the motor and the second four-way valve; and in the case that the thermal management system is in the fourth working mode, both the first liquid pump and the second liquid pump are configured to provide power for water circulation between the battery, the motor and the second heat exchange means.

28. An electric vehicle, comprising the thermal management system according to any one of claims 1 to 27.
